# EUROPEAN PATENT SPECIFICATION

(11) **EP 0 398 679 B1**
(45) Date of publication and mention of the grant of the patent: **09.11.1994**
(21) Application number: 90305271.0
(22) Date of filing: 16.05.1990
(51) Int. Cl.: B65G 17/06, B65G 21/20

(54) **Conveyor**
Fördereinrichtung
Convoyeur

(30) Priority: 16.05.1989 GB 8911127
(43) Date of publication of application: 22.11.1990
(73) Proprietor: Robertson, Kelvin Taylor, Scarborough, North Yorkshire YO12 5QB (GB)
(72) Inventor: Robertson, Kelvin Taylor, Scarborough, North Yorkshire YO12 5QB (GB)
(74) Representative: Sherrard-Smith, Hugh

(56) References cited:
- EP-A- 0 095 933
- GB-A- 2 008 523
- GB-A- 2 185 956
- US-A- 4 184 588

## Description

The present invention relates to a conveyor arrangement and a method of operating a conveyor arrangement.

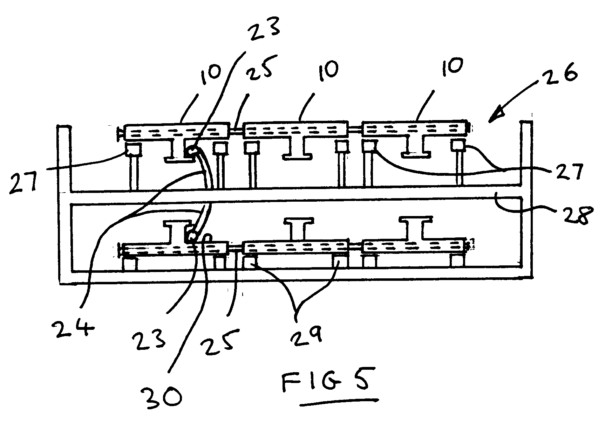

It has been proposed in European Patent Publication No. 0 095 933 (Palmaer) to include a downwardly projecting guide member 32, as shown in Figures 7 and 8, which engages a track or guide to resist side loading when a belt follows a curved path. However, no provision is made for any resistance to upwards movement of the conveyor which tends to occur of the outermost part of the conveyor with respect to the turn.

US 4 184 588 (Lapeyre) shows, in Figure 4, a conveyor arrangement including a plurality of conveyor portions including a restraint portion, the restraint portion extending at an angle to the region of the conveyor which, in use, provides support and at an angle to the perpendicular to the region of the conveyor portion which, in use, provides support, the arrangement being such that when the conveyor turns to one side, the restraint portion of a conveyor portion is spaced from the side of the conveyor portion located innermost with respect to the turn, and the restraint portion is arranged to co-operate with a guide comprising part of the arrangement to resist inwards movement of the conveyor portion with respect to the turn.

According to one aspect of the present invention, a conveyor arrangement with a conveyor running along a path with lateral turns, the conveyor includes a plurality of conveyor portions including a restraint portion, the restraint portion extending downwardly from the body of the conveyor portion and inwardly with respect to a turn, the arrangement being such that when the conveyor turns to one side, the restraint portion of a conveyor portion is spaced from the side of the conveyor portion located innermost with respect to the turn, with the restraint portion co-operating with a guide to resist inwards movement of the conveyor portion with respect to the turn, and to resist upwards movement of the side of the conveyor portion located outermost with respect to the turn.

In use, the restraint portion may co-operate with the guide to resist inwards movement with respect to the turn, and the conveyor portion may be biased against the guide to more firmly resist upwards movement of the side of the conveyor portion located outermost with respect to the turn.

The restraint portion may extend downwardly with respect to what, in use, is the region of the conveyor portion which provides support.

The restraint portion may be located between and spaced from each side of its conveyor portion.

Preferably the restraint portion may extend in two opposed directions, each at an angle to the perpendicular to the region of the conveyor portion which, in use, provides support. The extension in one of the opposed directions of the restraint portion may co-operate with the guide in order to resist upwards movement of one side of the conveyor portion located outermost with respect to the turn in one direction and the extension in the other opposed direction resists upwards movement of the side of the conveyor portion located outermost with respect to a turn in the other direction by co-operating with a guide.

The present invention also relates to a method of operating a conveyor arrangement which includes a guide extending around a turn and a plurality of conveyor portions including a restraint portion, the restraint portions extending at an angle to the region of the conveyor portions which provide support and at an angle to the perpendicular to the region of the conveyor portions which provide support, the method comprising the restraint portions engaging with the guide when the conveyor travels around the turn at a region spaced from the side of the conveyor located innermost with respect to the turn to resist inwards movement of the conveyor portions with respect to the turn wherein a part of the restraint portions which extend at an angle to the perpendicular to the region which provides support and which extend inwardly with respect to the turn co-operates with the guide to resist upwards movement of the side of the conveyor portions located outermost with respect to the turn.

The invention may be carried into practice in various ways, but one embodiment will now be described by way of example only and with reference to the accompanying diagrammatic drawings in which:-
Figure 1 shows a view from below of a module;
Figure 2 shows a side view of the module including a section through a length of guide member;

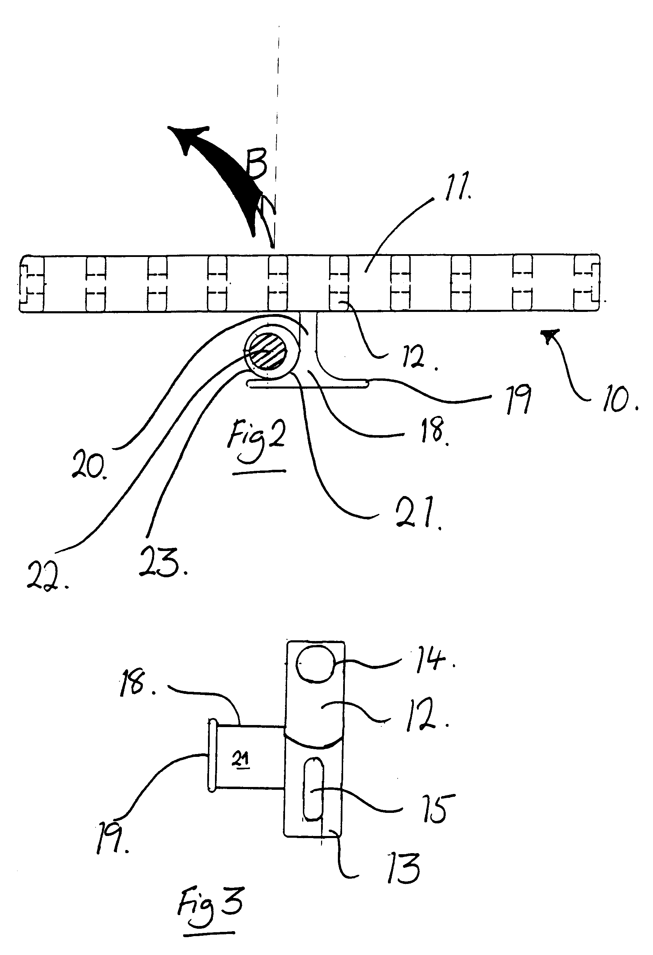

Figure 3 shows an end view of the module;
Figure 4 shows a restraint member co-operating with a guide member, and
Figure 5 is a schematic cross-section showing an upper and lower run of a conveyor.

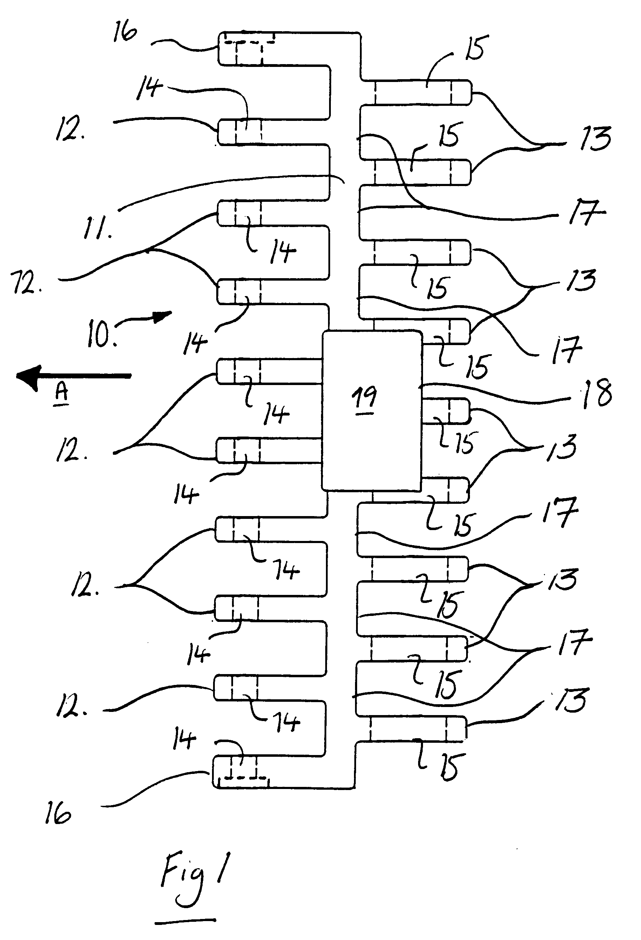

Referring particularly to Figure 1, a module 10 for use in a conveyor belt has a generally rectangular body 11 with a first set of projections 12 and a second set of projections 13 extending outwardly from the body 11 in opposite directions 13. The first projections 12 have at their ends cylindrical holes 14 and second projections 13 have at their ends elongate holes 15 which are offset so that successive modules may be combined by interweaving their projections, aligning cylindrical holes of one module with the elongated holes 15 of another module and inserting connecting rods (not shown) therethrough.

The ends 16 of the module slide and run in tracks (not shown) and are supported thereby.

The motive force for the conveyor is provided by a sprocket wheel (not shown) the teeth of which co-operate with curved surfaces 17 to propel the module in the direction of arrow A.

The elongated nature of the holes 15 allow, to some extent, a non-parallel alignment of successive modules connected by connecting rods. Hence the conveyor can be made to travel in an arc or bend.

At least some of the modules have a downwardly depending restraining member 18, with a generally rectangular base 19, attached midway along the length of the module body 11.

Referring now to Figure 2, the restraining member 18 has a portion 20 which extends downwardly from the body 11 of the module 10 which portion 20 is integral with the base 19.

The surface 21 of the restraining member 18 is generally cylindrical and is arranged to co-operate with the sleeve 23 of a guide member 22 (as the guide member is generally cylindrical, dirt tends to fall off and does not become trapped). The guide member (of which a section is shown) may extend for any length along the conveyor but is particularly useful at a bend.

If the conveyor changes direction so that the guide member 22 forms a left hand bend as shown schematically by arrow B, then the resulting forces caused by the change of direction will tend to push the local portion of conveyor inwardly along a radius of the are described by the movement of the conveyor, and upwardly resulting in a flipping action about the inner edge of the module.

These forces are resisted by reaction forces exerted by the guide member on the restraint member.

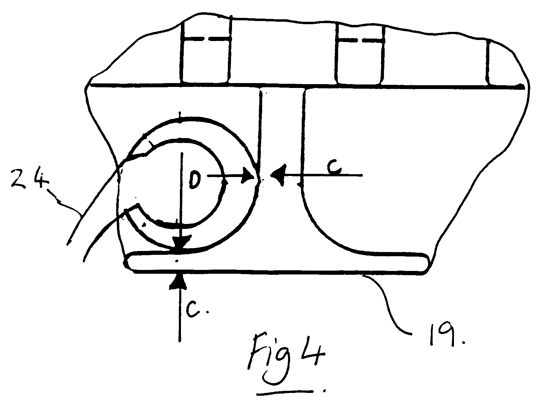

As illustrated in Figure 4, the inwards forces exerted on the local conveyor portion as a result of the change of direction may be represented by arrows C.

Arrows D represent reaction forces exerted by the guide member on the restraining member.

It will be seen that the stronger either of the two forces resulting from the change of direction becomes, the less likely the guide member and entraining member will cease to co-operate and therefore it is less likely that a flipping action will ensue.

The guide member is connected to a fixed part of the machine (not shown) via a series of legs 24, and the guide member is deformable such that it can be bent to correspond with the desired direction of travel of the conveyor.

It can be seen that a guide member can be located on either side of the portion 20 to enable the module to co-operate with the guide to resist forces occurring when the module turn in either direction.

Figure 5 shows schematically, a cross-section through a conveyor including three modules 10 located side by side. Any number of modules, such as six, may be arranged side by side in order that a conveyor of the required width can be provided. A common axle 25 may extend through each of the modules, as shown, or each module may be provided with a separate axle.

On the upper run 26 of the conveyor, wear strips 27 may be provided at each side of each module extending upwardly from a central support plate 28. These wear strips support the modules and may also serve to provide a reactive force to any attempted turning movement of the modules about the guide 23.

A single guide 23 on the upper and lower modules at outermost region with respect to the curve may be provided. Alternatively that guide could act on one of the other modules or, alternatively or additionally, more than one guide could be provided. The guide 23 is connected by the legs 24 to the support plate 28.

Wear strips 29 support the modules 10 on their return run and the guide 23 co-operates with the portion 20 of the restraining member 18 and what is, in the load carrying position, the underside 30 of the module to resist inwards and upwards movement of the modules on the return run.

## Claims

1. A conveyor arrangement with a conveyor running along a path with lateral turns, this conveyor including a plurality of conveyor portions (10) including a restraint portion, the restraint portion (18) extending downwardly from the body of the conveyor portion and inwardly with respect to a turn, the arrangement being such that when the conveyor turns to one side, the restraint portion of a conveyor portion is spaced from the side of the conveyor portion located innermost with respect to the turn, with the restraint portion co-operating with a guide to resist inwards movement of the conveyor portion with respect to the turn, and to resist upwards movement of the side of the conveyor portion located outermost with respect to the turn.

2. An arrangement as claimed in Claim 1 in which, in use, when the restraint portion co-operates with the guide (22) to resist inwards movement with respect to the turn, the conveyor portion is biased against the guide to more firmly resist upwards movement of the side of the conveyor portion located outermost with respect to the turn.

3. An arrangement as claimed in any preceding claim in which the restraint portion extends downwardly with respect to what, in use, is the region of the conveyor portion which provides support.

4. An arrangement as claimed in any preceding claim in which the restraint portion is located between and spaced from each side of its conveyor portion.

5. An arrangement as claimed in any preceding claim in which the restraint portion extends in two opposed directions, each at an angle to the perpendicular to the region of the conveyor portion which, in use, provides support.

6. An arrangement as claimed in Claim 5 in which the extension in one of the opposed directions of the restraint portion co-operates with the guide in order to resist upwards movement of one side of the conveyor portion located outermost with respect to the turn in one direction and the extension in the other opposed direction resists upwards movement of the side of the conveyor portion located outermost with respect to a turn in the other direction by co-operating with a guide.

7. A method of operating a conveyor arrangement including a guide (23) extending around a turn (B) and a plurality of conveyor portions (10) including a restraint portion (18), the restraint portions extending at an angle (20) to the region of the conveyor portions which provide support and at an angle (19) to the perpendicular to the region of the conveyor portions which provides support, the method comprising the restraint portions engaging with the guide (23) when the conveyor travels around the turn at a region spaced from the side of the conveyor located innermost with respect to the turn (B) to resist inwards movement of the conveyor portion with respect to the turn, wherein a part of the restraint portions which extend at an angle to the perpendicular to the region which provides support and which extend inwardly with respect to the turn co-operates with the guide to resist upwards movement of the side of the conveyor portions located outermost with respect to the turn.

## Patentansprüche

1. Förderer-Anordnung mit einem Förderer, der entlang eines Weges mit seitlichen Bögen verläuft, wobei der Förderer eine Mehrzahl von Fördererabschnitten (10) mit einem Rückhalteabschnitt aufweist, wobei der Rückhalteabschnitt (18) nach unten von dem Körper des Fördererabschnitts und nach innen in bezug auf einen Bogen verläuft, wobei die Anordnung dergestalt ist, daß, wenn der Förderer in einen Bogen zu einer Seite abbiegt, der Rückhalteabschnitt eines Fördererabschnitts in Abstand von der Seite des Fördererabschnitts liegt, die am weitesten innen in bezug auf den Bogen liegt, wobei der Rückhalteabschnitt mit einer Führung zusammenwirkt, um der Bewegung des Fördererabschnitts nach innen in bezug auf den Bogen Widerstand entgegenzusetzen und um eine Aufwärtsbewegung der Seite des Fördererabschnitts Widerstand entgegenzusetzen, die in bezug auf den Bogen am weitesten außen liegt.

2. Anordnung nach Anspruch 1, wobei im Betrieb, wenn der Rückhalteabschnitt mit der Führung (22) zusammenwirkt, um der Bewegung nach innen in bezug auf den Bogen Widerstand entgegenzusetzen, der Fördererabschnitt gegen die Führung angedrückt wird, um einer Aufwärtsbewegung der in bezug auf den Bogen außenliegenden Seite des Fördererabschnitts stärkeren Widerstand entgegenzusetzen.

3. Anordnung nach einem der vorhergehenden Ansprüche, bei der Rückhalteabschnitt nach unten in bezug auf den Bereich des Fördererabschnitts verläuft, der im Betrieb als Trägerfläche dient.

4. Anordnung nach einem der vorhergehenden Ansprüche, bei der der Rückhalteabschnitt zwischen und mit Abstand zu jeder Seite des Fördererabschnitts angeordnet ist.

5. Anordnung nach einem der vorhergehenden Ansprüche, bei der der Rückhalteabschnitt in zwei entgegengesetzte Richtungen ausgedehnt ist, die jeweils im Winkel zur Senkrechten des Bereichs des Fördererabschnitts stehen, der im Betrieb als Trägerfläche dient.

6. Anordnung nach Anspruch 5, bei der die Ausdehnung des Rückhalteabschnitts in eine der entgegengesetzten Richtungen mit der Führung zusammenwirkt, um Aufwärtsbewegungen der in bezug auf einen Bogen in einer Richtung weiter außen liegenden Seite des Fördererabschnitts zu widerstehen, und die Ausdehnung in die entgegengesetzte Richtung Aufwärtsbewegungen der in bezug auf einen Bogen in die andere Richtung außen liegenden Seite des Fördererabschnitts durch Zusammenwirken mit einer Führung Widerstand entgegensetzt.

7. Verfahren zum Betreiben einer Förderer-Anordnung, die eine entlang eines Bogens (B) verlaufende Führung (23) und eine Mehrzahl von Fördererabschnitten (10) aufweist, welche einen Rückhalteabschnitt (18) enthalten, wobei die Rückhalteabschnitte in einem Winkel (20) in bezug auf die Bereiche der Fördererabschnitte, die als Trägerflächen dienen, und in einem Winkel (19) zur Senkrechten des Bereiches der Fördererabschnitte verlaufen, die als Trägerflächen dienen, wobei das Verfahren den Schritt aufweist, daß die Rückhalteabschnitte, wenn der Förderer um einen Bogen läuft, in einem Bereich in Anlage an die Führung (23) kommen, der in Abstand von der in bezug auf den Bogen (B) innenliegenden Seite des Förerers liegt, um der nach innen gerichteten Bewegung des Fördererabschnitts in bezug auf den Bogen Widerstand zu geben, wobei ein Teil der Rückhalteabschnitte, der in einem Winkel in bezug auf die Senkrechte zu dem Bereich, der die Trägerfläche bildet, ausgedehnt ist und sich nach innen in bezug auf den Bogen erstreckt, mit der Führung zusammenwirkt, um Bewegungen nach oben der in bezug auf den Bogen außenliegenden Seite der Fördererabschnitte Widerstand entgegenzusetzen.

## Revendications

1. Dispositif transporteur avec un transporteur se déplaçant sur un trajet présentant des courbes latérales, ce transporteur comprenant une pluralité de tronçons (10) de transporteur comprenant une section de retenue, cette section (18) de retenue s'étendant vers le bas à partir du corps du transporteur et vers l'intérieur par rapport à une courbe, le dispositif étant tel que lorsque le transporteur tourne d'un côté, la section de retenue d'un tronçon de transporteur soit située à une certaine distance du flanc du tronçon de transporteur situé le plus à l'intérieur par rapport à la courbe, la section de retenue coopérant avec un dispositif de guidage pour résister au mouvement en direction de l'intérieur du tronçon de transporteur par rapport à la courbe, et pour résister au mouvement vers le haut du flanc du tronçon de transporteur situé le plus à l'extérieur par rapport à la courbe.

2. Dispositif selon la Revendication 1, dans lequel, en cours d'utilisation, lorsque la section de retenue coopère avec le dispositif de guidage (22) pour résister au mouvement en direction de l'intérieur par rapport à la courbe, le tronçon de transporteur est déporté contre le dispositif de guidage pour résister plus fermement au mouvement vers le haut du flanc du tronçon de transporteur situé le plus à l'extérieur par rapport à la courbe.

3. Dispositif selon l'une quelconque des Revendications précédentes dans lequel la section de retenue s'étend vers le bas par rapport à ce qui, en cours d'utilisation, est la zone du tronçon de transporteur qui assure le support.

4. Dispositif selon l'une quelconque des Revendications précédentes dans lequel la section de retenue est située entre, et à une certaine distance de, chaque flanc de son tronçon de transporteur.

5. Dispositif selon l'une quelconque des Revendications précédentes dans lequel la section de retenue se prolonge dans deux directions opposées, chacune en angle avec la perpendiculaire à la zone du tronçon de transporteur qui, en cours d'utilisation, assure le support.

6. Dispositif selon la Revendication 5, dans lequel le prolongement dans l'une des directions opposées de la section de retenue coopère avec le dispositif de guidage de manière à résister au mouvement vers le haut du flanc du tronçon de transporteur situé le plus à l'extérieur par rapport à une courbe dans une direction, et l'autre prolongement dans la direction opposée résiste au mouvement vers le haut du flanc du tronçon de transporteur situé le plus à l'extérieur par rapport à une courbe dans une autre direction, ceci en coopérant avec un dispositif de guidage.

7. Procédé d'utilisation d'un dispositif transporteur comprenant un dispositif de guidage (23) s'étendant autour d'une courbe (B) et une pluralité de tronçons (10) de transporteur comprenant une section de retenue (18), les sections de retenue s'étendant en angle (20) par rapport à la zone des tronçons de transporteur qui assurent le support et en angle (19) par rapport à la perpendiculaire à la zone des tronçons de transporteur qui assurent le support, ce procédé comprenant le fait que les sections de retenue s'engagent avec le dispositif de guidage (23) lorsque le transporteur circule autour de la courbe dans une zone située à une certaine distance du flanc du transporteur située la plus a' l'intérieur par rapport à la courbe (B) pour résister au mouvement en direction de l'intérieur du tronçon de transporteur par rapport à la courbe, dans lequel une partie des sections de retenue qui se prolongent en angle par rapport à la perpendiculaire à la zone qui assure le support et qui s'étendent vers l'intérieur par rapport à la courbe coopèrent avec le dispositif de guidage pour résister au mouvement vers le haut du flanc des tronçons de transporteur situé le plus à l'extérieur par rapport à la courbe.
